# EUROPEAN PATENT SPECIFICATION

(11) **EP 3 109 085 B1**
(45) Date of publication and mention of the grant of the patent: **20.02.2019**
(21) Application number: 16170022.4
(22) Date of filing: 17.05.2016
(51) Int. Cl.: B60K 13/04, F01N 3/021, F01N 3/20, F01N 13/00

(54) **WORK VEHICLE**
ARBEITSFAHRZEUG
VÉHICULE DE TRAVAIL

(30) Priority: 19.06.2015 JP 2015123712
(43) Date of publication of application: 28.12.2016
(73) Proprietor: Kubota Corporation, Osaka-shi, Osaka 556-8601 (JP)
(72) Inventor: IWAMOTO, Masatoshi, Sakai-shi, Osaka 590-0823 (JP); OTANI, Toshikatsu, Sakai-shi, Osaka 590-0823 (JP)
(74) Representative: Global IP Europe Patentanwaltskanzlei

(56) References cited:
- WO-A1-2014/157285
- JP-A- 2014 190 328
- JP-A- 2015 163 512

## Description

### Field of the Invention

The present invention relates to the technology of a work vehicle, and more specifically to the technology of a work vehicle provided with a diesel particulate filter (DPF) and a selective catalytic reduction device (SCR) that purify an exhaust gas of an engine.

### Background

There have been known technologies related to a DPF and a SCR that purify an exhaust gas of an engine. Examples of such technologies include that described in JP 2014-105549 A.

JP 2014-105549 A describes an engine device that includes a first case (DPF) and a second case (SCR). The first case (DPF) removes particulate matter (PM) contained in the exhaust gas. The second case (SCR) removes nitrogen oxides contained in the exhaust gas. The first case and the second case are disposed on a top side of the engine.

Nevertheless, when such an engine device is applied to a work vehicle such as a tractor, the engine device is mounted inside the bonnet, resulting in the disadvantage that a height of the bonnet needs to be increased. In this case, for example, when the work vehicle passes underneath tree branches, fruits, and the like, the bonnet readily comes into contact with such branches and fruits. In particular, when the bonnet comes into contact with the fruits, the fruits might get bruised.

In light of such circumstances as described above, the technical problem is to provide a work vehicle with a low bonnet.

WO 2014/157285 A1 discloses a work vehicle comprising: a driver's seat; a bonnet disposed forward of the seat; an engine arranged under the bonnet; and a diesel particulate filter and an selective catalytic reduction configured to purify an exhaust gas of the engine, the diesel particulate filter and the selective catalytic reduction being arranged under the bonnet and forward of the engine. It further discloses a radiator disposed under the bonnet.

### Summary

The technical problem to be solved by the present invention is as described above, and the solution to solve this problem is mentioned in the characterising part of claim 1.

According to a first aspect of the present invention, it is provided a work vehicle comprising: a driver's seat; a bonnet disposed forward of the seat; and an engine arranged under the bonnet; characterised in that a diesel particulate filter and an selective catalytic reduction configured to purify an exhaust gas of the engine, the diesel particulate filter and the selective catalytic reduction being arranged under the bonnet and forward of the engine.

According to the configuration above, the diesel particulate filter (hereinafter DPF) and the selective catalytic reduction (hereinafter SCR) are disposed not over the engine but forward of the engine. Thereby the height of the bonnet can be decreased.

In addition, the DPF, the SCR and the engine are disposed not next to the engine with respect to the width direction of the work vehicle. Thereby an increase in a width dimension of the work vehicle can be avoided. The width direction is a right-left direction with respect to the travelling direction of the work vehicle.

According to a preferred embodiment of the work vehicle mentioned above, the diesel particulate filter and the selective catalytic reduction are disposed side by side along the width direction of the work vehicle.

According to the above configuration, the length of the bonnet can be decreased.

According to another preferred embodiment of any work vehicles mentioned above, at least one of the diesel particulate filter and the selective catalytic reduction has a shape elongated along one dimension; and the diesel particulate filter and/or the selective catalytic reduction are disposed such that the longitudinal dimension of at least one of the diesel particulate filter and the selective catalytic reduction is oriented along an up-down direction of the work vehicle.

According to the configuration above, it is possible to decrease the length of the bonnet as well as the width of the bonnet.

According to the invention the work vehicle further comprises: a radiator configured to cool a coolant of the engine, the radiator being disposed under the bonnet and forward of the diesel particulate filter and the selective catalytic reduction.

According to the configuration above, a cooling efficiency of the radiator can be maintained.

The ambient air flows into the space under the bonnet and passes through the radiator, and then reaches to the DPF and the SCR. This enables the radiator to receive the ambient air which is not influenced by the heat from the DPF and SCR. Thereby the ambient air can effectively cool down the coolant in the radiator.

Furthermore preferably, the radiator mentioned above is inclined along a front-back direction of the work vehicle.

According to the configuration above, the inclined radiator needs less height in the space under the bonnet, comparing to its actual height dimension. Thereby, the height of the space formed under the bonnet can be reduced.

The radiator has a principal surface for exchanging heat between the ambient air and a coolant of the engine. The principal surface is preferably directed toward the forward direction of the work vehicle.

Furthermore preferably, any radiator mentioned above is inclined along the front-back direction such that the upper end of the radiator is positioned at the back of the lower end of the radiator in a plane view.

According to the configuration above, the radiator is accommodated in the space formed between the front wheel and the bonnet such that the inclined principal surface of the radiator is arranged roughly along the front wheel. Thereby the space can effectively accommodate the radiator, which leads to downsizing of the space under the bonnet.

Another preferable work vehicle with any one of the radiators mentioned above further comprises an air cleaner configured to purify the ambient air to be supplied to the engine, the air cleaner being disposed under the bonnet such that at least a portion thereof overlaps with the radiator in a plan view and a front view.

According to the above configuration, it is possible to effectively utilize the space inside the bonnet.

The inclined radiator forms a space between its principal surface and the bonnet, and another space under its principal surface. The air cleaner is then disposed in either one of these spaces. Thereby the air cleaner can be accommodated in the space under the bonnet without extending the space for the air cleaner.

Another preferable work vehicle with any one of the radiators mentioned above further comprises a radiator fan configured to be driven by the engine and cool the radiator, the radiator fan being disposed between the radiator and both the diesel particulate filter and the selective catalytic reduction.

According to the configuration above, the radiator fan shields the heat irradiated from the engine placed at the back of the DPF and SCR. Therefore, the efficiency of the radiator can be maintained or be improved.

More preferably, the radiator fan is located closer to the radiator than to the DPF and the SCR. Thereby, the wind from the radiator fan can hit the radiator and can effectively cool it down.

Furthermore preferably, the work vehicle with the radiator fan further comprises a shaft connecting the engine and the radiator fan and linearly extending between the diesel particulate filter and the selective catalytic reduction, and configured to transmit a drive force of the engine to the radiator fan.

According to the configuration above, the engine and radiator fan are connected by the shaft which linearly extends between the DPF and the SCR without skirting around the DPF and the SCR. Thereby the radiator fan can be driven by a simple structure.

According to another preferred embodiment of any one of the work vehicles mentioned above, a work vehicle further comprises a shielding means disposed under the bonnet and configured to at least partially shield wind towards at least one of the diesel particulate filter and the selective catalytic reduction.

According to the configuration above, the shielding means blocks at least partially the wind which blows toward the DPF and SCR. Thereby the temperature of the DPF and the SCR can be maintained without being cooled down.

Furthermore preferably, the shielding means mentioned above is configured to surround at least the front side of at least one of the diesel particulate filter and the selective catalytic reduction.

The DPF and SCR can be effectively protected from the wind which blows from forward of the work vehicle. The "front side" is with respect to the travelling direction of the work vehicle.

According to another preferred embodiment of any one of the work vehicles mentioned above, the diesel particulate filter and the selective catalytic reduction are arranged to form a passage of wind such that the passage linearly extends toward the engine.

The DPF and the SCR preferably form the passage of wind such that the passage linearly extends toward the engine. The wind can directly reach to the engine through the passage. Thereby the engine can be effectively cooled down.

More preferably, the DPF and the SCR are spaced away from each other to form the passage between them.

Furthermore preferably, each of the diesel particulate filter and the selective catalytic reduction is arranged either on the right side or the left side with respect to a virtual line extending along the front-back direction of the work vehicle, the virtual line further extending through the centre of the engine with respect to width direction of the work vehicle.

Preferably, the DPF and the SCR form a passage of wind from the radiator fan to the engine such that the passage extends linearly from the radiator fan towards the centre portion of the engine with respect to the width direction of the work vehicle in the front view. Thereby, the wind from the radiator fan can directly reach to the centre portion of the engine and effectively cool down the engine.

More preferably, the DPF and the SCR form such a passage therebetween.

Furthermore preferably, any one of the work vehicles mentioned above further comprises first and second shielding members disposed under the bonnet; the first shielding member surrounding at least the front side of the diesel particulate filter, and the second shielding member surrounding at least the front side of the selective catalytic reduction.

Furthermore preferably, in any one of the work vehicles mentioned above, the first shielding member and the second shielding member form a passage of wind such that the passage linearly extends toward the engine and between the first and second shielding members.

The first and second shielding members preferably form the passage of the wind such that the passage linearly guides the wind to the engine.

More preferably, each of the first and second shielding members has a wind blocking part and a wind guiding part. The wind blocking part is located forward of the DPF or SCR. The wind guiding parts of the first and second shielding members are arranged to form the passage therebetween.

In the above mentioned aspect and embodiments, any structure and/or function of one embodiment can be adopted in another embodiment as long as the new combination is compatible.

### Brief Description of the Drawings

FIG. 1 is a side view illustrating an overall configuration of a tractor according to one embodiment of the present invention.
FIG. 2 is a left side view illustrating the configuration inside a bonnet.
FIG. 3 is a plane view of the same.
FIG. 4 is a schematic cross-sectional view along the arrow X-X illustrated in FIG. 3.
FIG. 5 is a left side view illustrating the configuration inside the bonnet according to another embodiment of the present invention.

### Detailed Description of Preferred Embodiments

In the following, the "up," "down," front," "forward," "back," "backward," "left," and "right" directions, respectively, are directions with respect to the travelling direction of a work vehicle. These directions are denoted by the arrow U for "up", the arrow D for "down", the arrow F for "front" and "forward", the arrow B for "back" and "backward", the arrow L for "left", and the arrow R for "right" in the drawings.

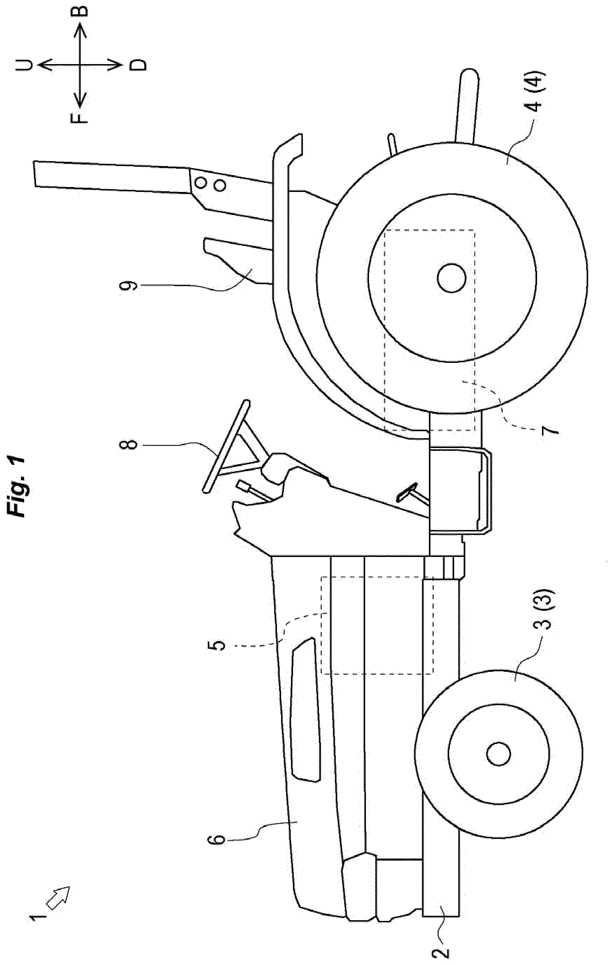

Referring to FIG. 1, a general configuration of a tractor 1, which is an example of a work vehicle according to the present invention, will be described.

The tractor 1 mainly includes a vehicle body frame 2, front wheels 3, 3, rear wheels 4, 4, an engine 5, a bonnet 6, a transmission 7, a steering wheel 8, and a seat 9.

The vehicle body frame 2 is disposed with a longitudinal axis thereof oriented along the front-back direction. A front portion of the vehicle body frame 2 is supported by a pair of right and left front wheels 3, 3 via a front axle mechanism (not illustrated). The transmission 7 is arranged on a rear portion of the vehicle body frame 2. A rear portion of the transmission 7 is supported by a pair of right and left rear wheels 4, 4 via a rear axle mechanism (not illustrated). The engine 5 such as a diesel engine is arranged on the front portion of the vehicle body frame 2. The engine 5 is covered by the bonnet 6. The bonnet 6 is formed such that an upper side plate is inclined in the downward direction along the forward direction, and gradually decreases in width in the up-down direction along the forward direction.

A drive force of the engine 5 is transmitted by the transmission 7 to the front wheels 3, 3 via the front axle mechanism and to the rear wheels 4, 4 via the rear axle mechanism. The drive force of the engine 5 rotates the front wheels 3, 3 and the rear wheels 4, 4 to propel the tractor 1.

A driving operation section includes the steering wheel 8, various operational tools, the seat 9, and the like. The driving operation is disposed at the back of the engine 5.

The steering wheel 8 adjusts (varies) a steering angle of the front wheels 3, 3, in accordance with a rotational operation amount thereof, which enables a driver to steer the tractor 1.

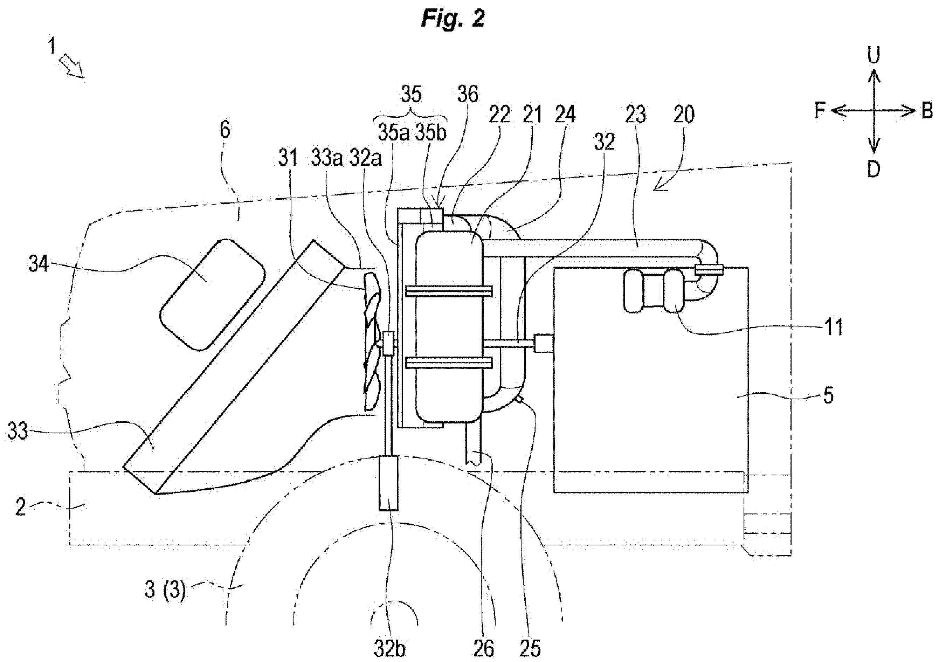

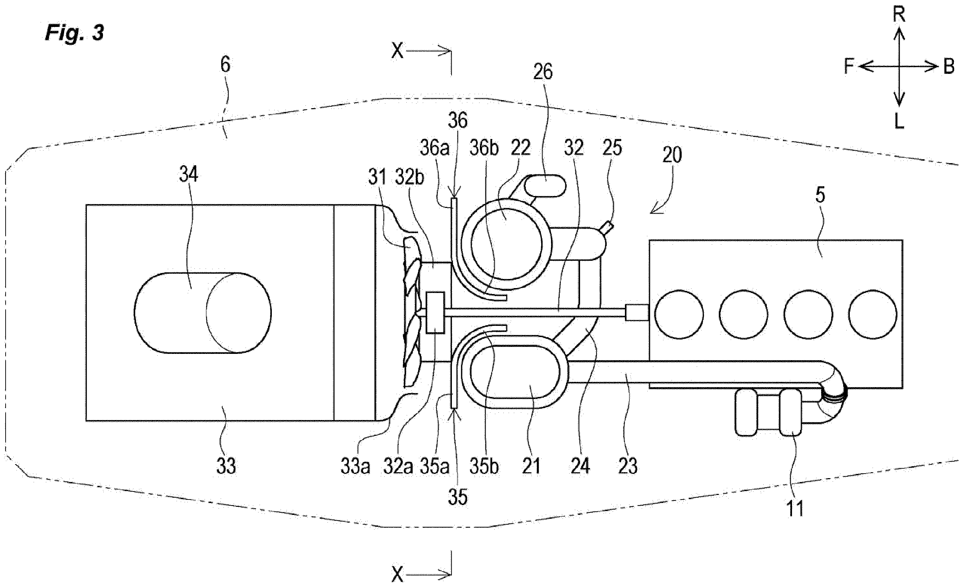

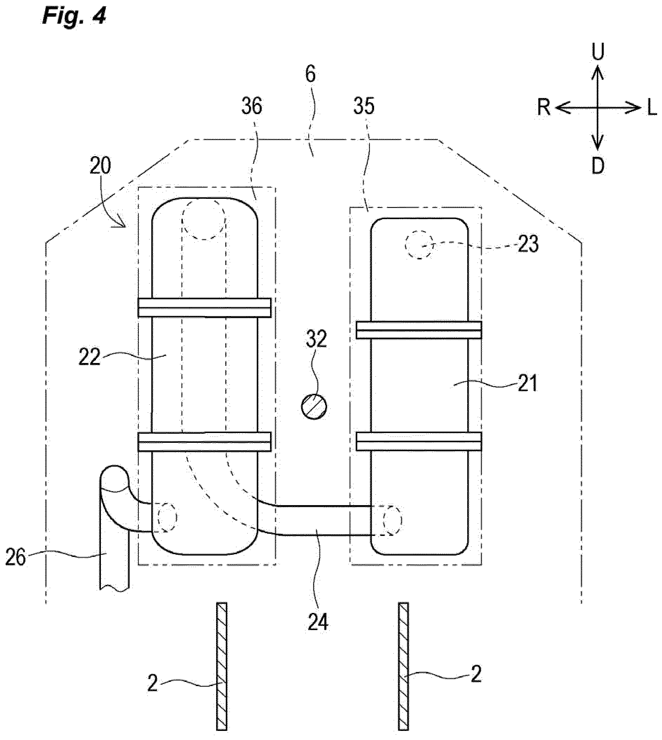

Referring to FIGS. 2 to 4, layouts of various members inside the bonnet 6 will be described.

Inside the bonnet 6, the engine 5, a turbocharger 11, an exhaust gas purifier 20, a radiator fan 31, a shaft 32, a radiator 33, an air cleaner 34, a left shielding plate 35, a right shielding plate 36, and the like are disposed.

The engine 5 is disposed in a rear portion of the bonnet 6. The engine 5 is supported by the vehicle body frame 2.

The turbocharger 11 is configured to feed compressed air to a cylinder (not illustrated) of the engine 5. The turbocharger 11 is attached to a left upper end portion of a front-back midway section of the engine 5. The turbocharger 11 is connected to an intake manifold (not illustrated) and an exhaust manifold (not illustrated) of the engine 5. Exhaust gas flows into the turbocharger 11 from the exhaust manifold. The turbocharger 11 rotates a turbine using the entered exhaust gas, thereby feeding the compressed air from the intake manifold to the cylinder.

The exhaust gas purifier 20 is configured to purify and discharge the exhaust gas. The exhaust gas purifier 20 is disposed in a front-back midway section of the bonnet 6. The exhaust gas purifier 20 is provided with a diesel particulate filter (DPF) 21, a selective catalytic reduction device (SCR) 22, an inflow pipe 23, a connecting pipe 24, a reducing agent supply nozzle 25, and a muffler 26.

The DPF 21 is configured to collect particulate matter (PM) contained in the exhaust gas discharged from the engine 5. The DPF 21 is provided with a filter or the like to collect PM in a substantially cylindrical case (housing). The DPF 21 is disposed with its longitudinal axis oriented along the up-down direction. The DPF 21 is formed such that the height thereof along the up-down direction is smaller than the height along the up-down direction of the engine 5. The DPF 21 is disposed in front of the engine 5 on the left side, namely in front of the turbocharger 11.

The SCR 22 is configured to purify nitrogen oxides contained in the exhaust gas. The SCR 22 has a cylindrical case as a housing accommodating a catalyst and the like therein. The SCR 22 is disposed with its longitudinal axis oriented along the up-down direction. The SCR 22 is formed such that the height along the up-down direction is larger than the height along the up-down direction of the DPF 21, and is smaller than the height along the up-down direction of the engine 5. The SCR 22 is formed such that a width thereof along the front-back direction is narrower than a width of the DPF 21 along the front-back direction. The SCR 22 is disposed in front of the engine 5 on the right side, namely next to the DPF 21 on its right side. The SCR 22 is spaced away from the DPF 21 with a gap along the right-left direction between itself and the DPF 21.

The inflow pipe 23 is configured to guide the exhaust gas to the DPF 21. One end portion of the inflow pipe 23, i.e. the intake end portion, is connected to a rear end portion of the turbocharger 11. The inflow pipe 23 extends backwards along the front-back direction from the other end portion, i.e. the outlet end portion. The intake end portion bends back so as to extend further forward from the turning point. The intake end portion is connected to the turbocharger 11. The outlet end portion of the inflow pipe 23 is connected to an exhaust gas inlet (not illustrated) formed on a upper end portion of the DPF 21 on its back side.

The connecting pipe 24 is configured to guide the exhaust gas that has passed through the DPF 21 to the SCR 22. One end portion of the connecting pipe 24, i.e. the intake end portion, is connected to an exhaust gas outlet (not illustrated) formed on a lower end portion of the DPF 21 on its back side. The connecting pipe 24 extends from the intake end portion and bends at its midway towards an exhaust gas inlet (not illustrated) formed on an upper end portion of the SCR 22 on its back side. The other end portion of the connecting pipe 24, i.e. the outlet end portion, is connected to the exhaust gas inlet of the SCR 22.

The reducing agent supply nozzle 25 is configured to inject a urea aqueous solution into the connecting pipe 24. The reducing agent supply nozzle 25 is arranged on the midway section of the connecting pipe 24. The reducing agent supply nozzle 25 is connected to a tank (not illustrated), and is configured to inject the urea aqueous solution stored in the tank into the connecting pipe 24.

The muffler 26 is configured to discharge exhaust gas to the outside while reducing exhaust noise. One end portion of the muffler 26, i.e. the intake end portion, is connected to an exhaust gas outlet (not illustrated) formed on a lower end portion of the SCR 22 on its back side. A midway section of the muffler 26 appropriately bends. The other end portion of the muffler 26, i.e. the outlet end portion, opens to the outside of the bonnet 6.

In the exhaust gas purifier 20 configured as described above, exhaust gas is guided to the DPF 21 via the turbocharger 11 and the inflow pipe 23. When the exhaust gas flows through the DPF 21, the PM contained in the exhaust gas is collected therein.

The exhaust gas that has passed through the DPF 21 is guided to the SCR 22 via the connecting pipe 24. At this time, urea aqueous solution is injected from the reducing agent supply nozzle 25 into the exhaust gas that flows through the connecting pipe 24. The urea aqueous solution is hydrolyzed in the connecting pipe 24, producing ammonia, which is a reducing agent. The exhaust gas and the ammonia are sufficiently mixed in the connecting pipe 24. The ammonia chemically reacts with the nitrogen oxides contained in the exhaust gas in the SCR 22, and reduces the nitrogen oxides to nitrogen and water, which are harmless components. The exhaust gas that has passed through the SCR 22 is discharged to the outside via the muffler 26.

The radiator fan 31 is configured to cool the radiator 33 described later. The radiator fan 31 is disposed in front of the exhaust gas purifier 20. The radiator fan 31 is driven by the drive force from the engine 5. The radiator fan 31 suctions the ambient air in front of the radiator fan 31 (outside air that flows into the bonnet 6), and sends the suctioned air in the backward direction.

The shaft 32 is configured to drive the radiator fan 31. The shaft 32 is extends along the front-back direction. The front end portion of the shaft 32 is rotatably supported by a bearing 32a, and connected to the radiator fan 31. The bearing 32a is supported by the vehicle body frame 2 via a connecting member 32b formed into a plate shape, and the like. The rear end portion of the shaft 32 is connected to an output shaft of the engine 5 via a fixing means such as a belt. As a result, the shaft 32 transmits the drive force of the engine 5 to the radiator fan 31. The shaft 32 has, for example, two shaft-shaped members connected with each other by a universal joint (not illustrated), each having an axis disposed along a front-back direction. A front-back midway section of the shaft 32 is disposed between the DPF 21 and the SCR 22. Further, the front-back midway section of the shaft 32 extends above the connecting pipe 24. As a result, the shaft 32 extends between the DPF 21 and the SCR 22 to connect the engine 5 and the radiator fan 31.

The radiator 33 is configured to cool the coolant of the engine 5. The radiator 33 is disposed on the front portion of the bonnet 6, i.e. in front of the radiator fan 31. The radiator 33 is inclined along the front-back direction such that the upper end of the radiator 33 is positioned at the back of the lower end of the radiator 33 in a plane view.

The radiator 33 is connected to a water jacket (not illustrated) of the engine 5 via a hose and the like. Outside air that flows into the interior of the bonnet 6 passes through the radiator 33, thereby cooling the coolant of the engine 5. The radiator 33 is provided with a shroud 33a for introducing the outside air into the radiator fan 31. The shroud 33a is formed so as to extend from a rear portion of the radiator 33 toward the radiator fan 31. A rear end portion of the shroud 33a is formed so as to cover the outer periphery of the radiator fan 31.

The air cleaner 34 purifies the outside air supplied to the engine 5. The air cleaner 34 is disposed in front of and over the front-back midway section of the radiator 33. The air cleaner 34 is disposed in the interior of the bonnet 6 in the same posture as that of the radiator 33. The air cleaner 34, in its entirety, is disposed so as to overlap with the radiator 33 in a plane view and a front view. The air cleaner 34 is connected to the intake manifold via the turbocharger 11.

The left shielding plate 35 is configured to block wind that blows toward the DPF 21 (wind from the radiator fan 31, for example). The left shielding plate 35 is formed into a substantially J shape in a plane view. The left shielding plate 35 includes a plate-shaped member 35a along the right-left direction and a curved portion 35b. The curved portion extends from the plate-shaped member 35a and curves towards the backward direction.

The flat portion 35a is a section formed so as to extend in the rightward direction from a left end portion of the left shielding plate 35. The flat portion 35a is disposed in front of the DPF 21. A left end portion of the flat portion 35a is disposed in a position that overlaps with a left end portion of the DPF 21 in the front view.

The curved portion 35b is a section formed so as to extend from a right end portion of the flat portion 35a in the right backward direction (to the engine 5 side). The curved portion 35b is formed into a substantially arc shape in the plane view. A rear end portion of the curved portion 35b is located on the right side of the DPF 21.

Such a left shielding plate 35 is formed so that a height in the up-down direction is larger than the height in the up-down direction of the DPF 21. An upper end portion of the left shielding plate 35 is located over an upper end portion of the DPF 21. Further, a lower end portion of the left shielding plate 35 is located below a lower end portion of the DPF 21. As a result, the left shielding plate 35 is formed so as to cover a front portion of the DPF 21.

The right shielding plate 36 is configured to block wind that blows toward the SCR 22 (wind from the radiator fan 31, for example). The right shielding plate 36 is formed so as to be substantially bilaterally symmetrical with the left shielding plate 35. The right shielding plate 36 has a flat portion 36a and a curved portion 36b that correspond to the flat portion 35a and the curved portion 35b of the left shielding plate 35. The right shielding plate 36 is formed so as to cover a front portion of the SCR 22.

The left shielding plate 35 and right shielding plate 36 are, for example, fixed to the vehicle body frame 2 via a predetermined connecting member. The left shielding plate 35 and the right shielding plate 36 block the wind that blows toward the DPF 21 and the SCR 22, and make the DPF 21 and the SCR 22 less susceptible to wind exposure. Accordingly, the DPF 21 and the SCR 22 are less susceptible to being cooled by the wind that blows toward the DPF 21 and the SCR 22. Thus, the left shielding plate 35 and the right shielding plate 36 can suppress temperature decreases in the DPF 21 and the SCR 22. As a result, the left shielding plate 35 and the right shielding plate 36 can suppress decreases in a regeneration efficiency of the DPF 21 and a catalytic reaction efficiency of the SCR 22.

As described above, the DPF 21 and the SCR 22 are disposed in front of the engine 5. As a result, in the tractor 1, the rear portion which is the highest section of the bonnet 6 can be lowered. Thereby the height of the overall bonnet 6 can be decreased.

Accordingly, the bonnet 6 is less likely to contact with tree branches, fruits on the branches, and the like when the tractor 1 passes under the tree branches and fruits thereon. Further, a decrease in the height of the bonnet 6 makes it possible to maintain a field of vision in front of the driver on the downside.

Further, in the tractor 1, the DPF 21 and the SCR 22 are disposed in front of the engine 5. Thereby, the width in the right-left direction of the bonnet 6 is reduced at the portion where the engine 5, the DPF 21 and the SCR 22 are disposed. Further, this configuration enables to maintain the field of vision in front of the driver on his left and right side.

Further, the DPF 21 and the SCR 22 are disposed side by side along the right-left direction. Thereby, in the tractor 1, the length of the exhaust gas purifier 20 along the front-back direction is reduced. Furthermore, the length of the bonnet 6 along the front-back direction is reduced.

When the DPF 21 and the SCR 22 are disposed in front of the engine 5 as in the present embodiment, the length of bonnet 6 along the front-back direction might increase. This possibly results in deterioration in a turning performance of the tractor 1. However, even in such a case, the above configuration where the DPF 21 and the SCR 22 are disposed side by side in the tractor 1 along the right-left direction can prevent the length of the bonnet 6 from being increased more than necessary. Thereby the deterioration in the turning performance is suppressed.

Further, the DPF 21 and the SCR 22 are disposed such that their longitudinal axes are oriented along the up-down direction. Accordingly, in the tractor 1, it is possible to decrease the length of the bonnet 6 along the front-back direction as well as the width of the bonnet 6along the right-left direction.

The radiator 33 is disposed in front of the DPF 21 and the SCR 22. Thereby the outside air, which flows from outside into the interior of the bonnet 6, passes through the radiator 33 and then blows against the DPF 21 and the SCR 22. Accordingly, the outside air with a low temperature (the state before taking in the heat from the DPF 21 and the like and being increased in temperature) can pass through the radiator 33. Thereby the coolant of the engine 5 can be effectively cooled down with the outside air. Accordingly, the radiator 3 can suppress a decrease in a cooling efficiency of the coolant.

The radiator 33 is inclined along the front-back direction such that the upper end of the radiator 33 is positioned at the back of the lower end of the radiator 33 in a plane view. Thereby the actual height of the radiator 33 is reduced under the bonnet 6 along the up-down direction. The actual height of the radiator 33 is a difference in the height of an upper end portion and the height of the lower end portion of the radiator 33 with respect to the up-down direction. Such a posture makes it possible to decrease the height of the space for arranging the radiator 33 within the space under the bonnet 6. Thereby the height of the space under the bonnet 6 is decreased and the front portion of the bonnet 6 can be lowered. Further, such a posture of the radiator 33 enables itself to be accommodated under the front portion of the bonnet 6 even if the front portion of the bonnet 6 is lowered.

Further, such a posture also allows the space under the bonnet 6 to accommodate a larger radiator. As a result, the cooling efficiency of the engine 5 can be improved.

Here, when the radiator 33 is inclined along the front-back direction such that the upper end of the radiator 33 is positioned at the back of the lower end of the radiator 33 in a plane view, a space is formed in front of and over the radiator 33. In addition, another space is formed at the back of and under the radiator 33. The air cleaner 34 is disposed so as to overlap with the radiator 33 in the plane view and the front view. Accordingly, the air cleaner 34 is thus disposed in the space formed in front of and over the radiator 33. Accordingly, the inside space of the tractor 1 can be effectively utilized.

The radiator fan 31 is disposed in front of the DPF 21 and the SCR 22. This configuration enables the radiator fan 31, which is located at a position closer to the radiator 33 than the DPF 21 and the SCR 22, to suction the outside air flowing into the space under the bonnet 6. As a result, the radiator fan 31 can effectively cool down the radiator 33.

The shaft 32 extends between the DPF 21 and the SCR 22, connecting the engine 5 and the radiator fan 31. This configuration enables the shaft 32 to linearly connect the engine 5 and the radiator fan 31 without circumventing the DPF 21 and the SCR 22. As a result, the structure to drive the radiator fan 31 by the shaft 32 can be simplified.

It should be noted that the tractor 1 according to the present embodiment is an embodiment of the work vehicle according to the present invention. Further, the left shielding plate 35 and the right shielding plate 36 according to the present embodiment are embodiments of the shielding means according to the present invention.

In the present embodiment, the DPF 21 and the SCR 22 are disposed at the back of the radiator fan 31. The DPF 21 and the SCR 22 are preferably further disposed so as not to overlap with the centre portion of the engine 5 with respect to the right-left direction. More precisely, each of the DPF 21 and the SCR 22 is arranged either on the right side or the left side with respect to a virtual line extending along the front-back direction of the tractor 1. The virtual line extends through the centre of the engine 5 with respect to the right-left direction. As a result, the wind from the radiator fan 31 can be applied to the right-left centre portion of the engine 5. Thereby the engine 5 can be effectively cooled down by the wind.

The left shielding plate 35 and the right shielding plate 36 are spaced out with a gap therebetween along the right-left direction. As a result, the wind that blows toward the DPF 21 and the SCR 22 flows through the gap along the backward direction and blows against the engine 5. This configuration enables the left shielding plate 35 and the right shielding plate 36 to easily guide the wind towards the engine 5 while making the DPF 21 and the SCR 22 less susceptible to wind exposure. The radiator fan 31 can thus reliably cool the engine 5 even when the DPF 21 and the SCR 22 are disposed between the radiator fan 31 and the engine 5.

The left shielding plate 35 and the right shielding plate 36 have the curved portions 35b, 36b, respectively. The curved portions 35b, 36b are formed so as to extend from the flat portions 35a, 36a towards the engine 5. Accordingly, the left shielding plate 35 and the right shielding plate 36 can guide the wind that blows from the DPF 21 and the SCR 22 towards the engine 5. Thereby the cooling efficiency of the engine 5 by the radiator fan 31 can be improved.

While the above has described an embodiment of the present invention, the present invention is not limited to the above-described configuration, and various changes may be made within the scope of the invention set forth in the claims.

For example, while the work vehicle according to the present embodiment is the tractor 1, the type of work vehicle according to the present invention is not limited thereto. The work vehicle according to the present invention may be another agricultural vehicle, a construction vehicle, an industrial vehicle, or the like. The work vehicle according to the present invention is preferably applied to a folding-body type vehicle having excellent turning performance.

While the DPF 21 and the SCR 22 in the present embodiment are disposed next to each other along the right-left direction, the arrangement of the DPF and the SCR is not limited thereto, and may be next to each other along the front-back direction. The DPF and the SCR are not necessarily disposed next to each other along the right-left direction or front-back direction.

While the DPF 21 and the SCR 22 in the present embodiment are disposed with its longitudinal axis oriented along the up-down direction, the postures of the DPF and the SCR are not limited thereto. For example, the DPF and the SCR may be disposed in postures having their longitudinal axes oriented along the front-back direction or the right-left direction.

While the DPF 21 in the above embodiment is disposed on the right side of the SCR 22, the arrangement of the DPF and the SCR is not limited thereto. For example, the DPF may be disposed on the left side of the SCR.

the DPF 21 and the SCR 22 in the present invention are disposed at the back of the radiator 33.

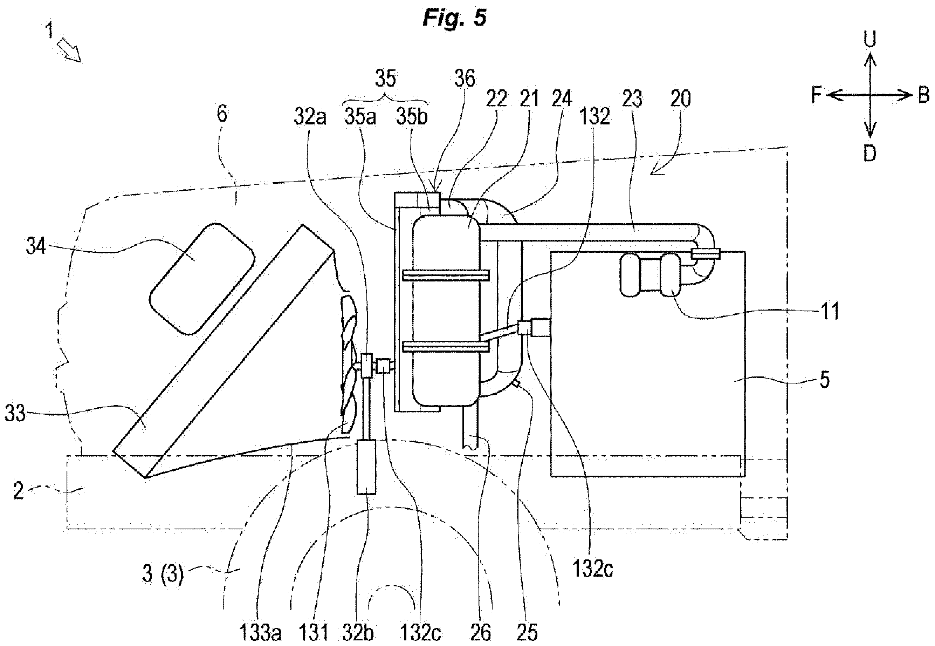

While the shaft 32 is disposed along the front-back direction in the above embodiment, the configuration of the shaft is not limited thereto. For example, Fig. 5 shows another arrangement of a shaft 132 which is disposed along the front-back direction in a plan view and is inclined downwardly in a side view. The front end of the shaft 132 is located below the rear end thereof. The front end portion and the rear end portion of the shaft 132 are connected to the output shaft of the engine 5 and a radiator fan 131 via a universal joint 132c, respectively.

Offsetting properly the shaft 132 along the up-down direction in the above manner enables the radiator fan 131 to be aligned with a centre of the radiator 33, for example. Thus the cooling efficiency of the radiator fan 131 can be improved. Furthermore, the radiator fan 131 can be accommodated in the space formed under the radiator 33 on its back side. Thereby the space inside the working vehicle can be effectively utilised. This leads to downsizing of a shroud 133a along the right-left direction and further leads to downsizing of the bonnet 6 in its front-back direction.

While the radiator 33 in the above embodiment is inclined along the front-back direction such that the upper end of the radiator 33 is positioned at the back of the lower end of the radiator 33 in a plane view, the posture of the radiator is not limited thereto. For example, a radiator may have a posture extending in the up-down direction. This holds true for the air cleaner 34 as well.

While the air cleaner 34 in the embodiment above entirely overlaps with the radiator 33 in the front view and the plane view, the positional relationship between the air cleaner and the radiator is not limited thereto. For example, the air cleaner may overlap with the radiator 33 only partially such as in a rear end portion thereof, and/or in the front view and the plane view.

While the left shielding plate 35 and the right shielding plate 36 in the embodiment above are each formed into a substantially J shape in the plane view, the shape of the shielding means is not limited thereto. For example, the shielding means may be substantially U shaped in the plane view so as to cover the DPF 21 and the SCR 22 from its front end portion to a front-back centre portion. Another shape of the shielding means would be a flat-plate shape with the plate surface oriented along the front-back direction. The shielding means may be provided with a heat insulating material that covers the DPF 21 and the SCR 22.

While the DPF 21 and the SCR 22 are less susceptible to exposure to wind from the radiator fan 31 due to the left shielding plate 35 and the right shielding plate 36 in the embodiment above, the shielding means may make at least one of the DPF 21 and the SCR 22 less susceptible to exposure to wind from the radiator fan 31.

While the left shielding plate 35 and the right shielding plate 36 keep the front portion of each of the DPF 21 and the SCR 22 less susceptible to exposure to wind from the radiator fan 31, the configuration of the shielding means is not limited thereto. For example, the shielding means may cover the entire periphery of the DPF 21, which keeps the DPF 21 in its entirety less susceptible to exposure to wind from the radiator fan 31.

The configuration of the DPF 21 and the SCR 22 is not limited to that in the embodiment above. For example, a diesel oxidation catalyst (DOC) may be further disposed on an upstream side of the filter of the DPF 21.

The reducing agent used in the SCR 22 is not limited to ammonia.

### Reference Signs List

- 1: Tractor (work vehicle)
- 5: Engine
- 6: Bonnet
- 21: DPF
- 22: SCR

## Claims

1. A work vehicle (1) comprising:
a driver's seat (9);
a bonnet (6) disposed forward of the seat;
an engine (5) arranged under the bonnet; and
a diesel particulate filter (21) and a selective catalytic reduction (22) configured to purify an exhaust gas of the engine, the diesel particulate filter and the selective catalytic reduction being arranged under the bonnet and forward of the engine;
a radiator (33) configured to cool a coolant of the engine (5), the radiator being disposed under the bonnet (6) **characterised by** the radiator being disposed forward of the diesel particulate filter (21) and the selective catalytic reduction (22).

2. The work vehicle (1) according to claim 1, wherein
the diesel particulate filter (21) and the selective catalytic reduction (22) are disposed side by side along the width direction of the work vehicle.

3. The work vehicle (1) according to claim 1 or 2, wherein
at least one of the diesel particulate filter (21) and the selective catalytic reduction (22) has a shape elongated along one dimension; and
the diesel particulate filter and/or the selective catalytic reduction are disposed such that the longitudinal dimension of at least one of the diesel particulate filter and the selective catalytic reduction is oriented along an up-down direction of the work vehicle.

4. The work vehicle (1) according to claim 1 to 3, wherein
the radiator (33) is inclined along a front-back direction of the work vehicle.

5. The work vehicle (1) according to claim 4, wherein
the radiator (33) is inclined along the front-back direction such that the upper end of the radiator (33) is positioned at the back of the lower end of the radiator (33) in a plane view.

6. The work vehicle (1) according to any one of claims 1 to 5, further comprising
an air cleaner (34) configured to purify the ambient air to be supplied to the engine (5), the air cleaner being disposed under the bonnet (6) such that at least a portion thereof overlaps with the radiator in a plan view and a front view.

7. The work vehicle (1) according to any one of claims 1 to 6, further comprising:
a radiator fan (31) configured to be driven by the engine (5) and cool the radiator (33), the radiator fan being disposed between the radiator and both the diesel particulate filter (21) and the selective catalytic reduction (22).

8. The work vehicle (1) according to claim 7, further comprising:
a shaft (32) connecting the engine (5) and the radiator fan (31) and linearly extending between the diesel particulate filter (21) and the selective catalytic reduction (22), and configured to transmit a drive force of the engine to the radiator fan.

9. The work vehicle (1) according to any one of claims 1 to 7, further comprising:
a shielding means (35, 36) disposed under the bonnet (6) and configured to at least partially shield wind towards at least one of the diesel particulate filter (21) and the selective catalytic reduction (22).

10. The work vehicle (1) according to claim 9, wherein
the shielding means (35, 36) is configured to surround at least the front side of at least one of the diesel particulate filter (21) and the selective catalytic reduction (22).

11. The work vehicle (1) according to any one of claims 1 to 10, wherein
the diesel particulate filter (21) and the selective catalytic reduction (22) are arranged to form a passage of wind such that the passage linearly extends toward the engine (5).

12. The work vehicle (1) according to claim 11,
each of the diesel particulate filter (21) and the selective catalytic reduction (22) is arranged either on the right side or the left side with respect to a virtual line extending along the front-back direction of the work vehicle, the virtual line further extending through the centre of the engine (5) with respect to width direction of the work vehicle.

13. The work vehicle (1) according to claim 11 or 12, further comprising:
first and second shielding members (35, 36) disposed under the bonnet (6);
the first shielding member (35) surrounding at least the front side of the diesel particulate filter (21), and
the second shielding member (36) surrounding at least the front side of the selective catalytic reduction (22).

14. The work vehicle (1) according to claim 11, 12 or 13, wherein
the first shielding member (35) and the second shielding member (36) form a passage of wind such that the passage linearly extends toward the engine (5) and between the first and second shielding members.

## Patentansprüche

1. Arbeitsfahrzeug (1) mit:
einem Fahrersitz (9);
einer Motorhaube (6), die vor dem Sitz angeordnet ist;
einem Motor (5), der unter der Motorhaube angeordnet ist; und
einem Dieselpartikelfilter (21) und einer selektiven katalytischen Reduktion (22), die konfiguriert sind, ein Abgas des Motors zu reinigen, wobei der
Dieselpartikelfilter und die selektive katalytische Reduktion unter der Motorhaube und vor dem Motor angeordnet sind;
einem Kühler (33), der konfiguriert ist, ein Kühlmittel des Motors (5) zu kühlen, wobei der Kühler unter der Motorhaube (6) angeordnet ist, **dadurch gekennzeichnet, dass** der Kühler vor dem Dieselpartikelfilter (21) und der selektiven katalytischen Reduktion (22) angeordnet ist.

2. Arbeitsfahrzeug (1) nach Anspruch 1, wobei der Dieselpartikelfilter (21) und die selektive katalytische Reduktion (22) nebeneinander längs der Breitenrichtung des Arbeitsfahrzeugs angeordnet sind.

3. Arbeitsfahrzeug (1) nach Anspruch 1 oder 2, wobei der Dieselpartikelfilter (21) und/oder die selektive katalytische Reduktion (22) eine Form aufweisen, die längs einer Abmessung gestreckt ist; und
der Dieselpartikelfilter und/oder die selektive katalytische Reduktion so angeordnet sind, dass die Längsabmessung des Dieselpartikelfilters und/oder der selektiven katalytischen Reduktion längs einer Aufwärts-/Abwärtsrichtung des Arbeitsfahrzeugs ausgerichtet ist.

4. Arbeitsfahrzeug (1) nach Anspruch 1 bis 3, wobei der Kühler (33) längs einer Front-/Heckrichtung des Arbeitsfahrzeugs geneigt ist.

5. Arbeitsfahrzeug (1) nach Anspruch 4, wobei der Kühler (33) längs der Front-/Heckrichtung geneigt ist, so dass in einer Draufsicht das obere Ende des Kühlers (33) auf der Rückseite des unteren Endes des Kühlers (33) angeordnet ist.

6. Arbeitsfahrzeug (1) nach einem der Ansprüche 1 bis 5, das ferner aufweist
einen Luftfilter (34), der konfiguriert ist, die Umgebungsluft zu reinigen, die dem Motor (5) zugeführt werden soll, wobei der Luftfilter so unter der Motorhaube (6) angeordnet ist, dass sich in einer Draufsicht und einer Vorderansicht mindestens ein Abschnitt davon mit dem Kühler überlappt.

7. Arbeitsfahrzeug (1) nach einem der Ansprüche 1 bis 6, das ferner aufweist:
einen Kühlerventilator (31), der konfiguriert ist, durch den Motor (5) angetrieben zu werden und den Kühler (33) zu kühlen, wobei der Kühlerventilator zwischen dem Kühler und sowohl dem Dieselpartikelfilter (21) als auch der selektiven katalytischen Reduktion (22) angeordnet ist.

8. Arbeitsfahrzeug (1) nach Anspruch 7, das ferner aufweist:
eine Welle (32), die den Motor (5) und den Kühlerventilator (31) verbindet und sich linear zwischen dem Dieselpartikelfilter (21) und der selektiven katalytischen Reduktion (22) erstreckt und konfiguriert ist, eine Antriebskraft des Motors auf den Kühlerventilator zu übertragen.

9. Arbeitsfahrzeug (1) nach einem der Ansprüche 1 bis 7, das ferner aufweist:
ein Abschirmungsmittel (35, 36), das unter der Motorhaube (6) angeordnet und konfiguriert ist, mindestens teilweise Wind zum Dieselpartikelfilter (21) und/oder zur selektiven katalytischen Reduktion (22) abzuschirmen.

10. Arbeitsfahrzeug (1) nach Anspruch 9, wobei
das Abschirmungsmittel (35, 36) konfiguriert ist, mindestens die Vorderseite des Dieselpartikelfilters (21) und/oder der selektiven katalytischen Reduktion (22) zu umgeben.

11. Arbeitsfahrzeug (1) nach einem der Ansprüche 1 bis 10, wobei
der Dieselpartikelfilter (21) und die selektive katalytische Reduktion (22) so angeordnet sind, dass sie einen Windkanal bilden, so dass sich der Kanal linear zum Motor (5) erstreckt.

12. Arbeitsfahrzeug (1) nach Anspruch 11, wobei
jeweils der Dieselpartikelfilter (21) und die selektive katalytische Reduktion (22) entweder auf der rechten Seite oder auf der linken Seite bezüglich einer virtuellen Line angeordnet sind, die sich längs der Front-/Heckrichtung des Arbeitsfahrzeugs erstreckt, wobei sich die virtuelle Line bezüglich der Breitenrichtung des Arbeitsfahrzeugs ferner durch die Mitte des Motors (5) erstreckt.

13. Arbeitsfahrzeug (1) nach Anspruch 11 oder 12, das ferner aufweist:
ein erstes und zweites Abschirmungselement (35, 36), die unter der Motorhaube (6) angeordnet sind;
wobei das erste Abschirmungselement (35) mindestens die Vorderseite des Dieselpartikelfilters (21) umgibt, und
wobei das zweite Abschirmungselement (36) mindestens die Vorderseite der selektiven katalytische Reduktion (22) umgibt.

14. Arbeitsfahrzeug (1) nach Anspruch 11, 12 oder 13, wobei das erste Abschirmungselement (35) und das zweite Abschirmungselement (36) einen Windkanal bilden, so dass sich der Kanal linear zum Motor (5) und zwischen dem ersten und zweiten Abschirmungselement erstreckt.

## Revendications

1. Véhicule de travail (1) comprenant :
un siège de conducteur (9) ;
un capot (6) disposé en avant du siège ;
un moteur (5) disposé en dessous du capot ; et
un filtre à particules pour diesel (21) et un réducteur catalytique sélectif (22) prévu pour purifier les gaz d'échappement du moteur, le filtre à particules pour diesel et le réducteur catalytique sélectif étant disposés en dessous du capot et en avant du moteur ;
un radiateur (33) prévu pour refroidir un fluide de refroidissement du moteur (5), ledit radiateur étant disposé en dessous du capot (6), **caractérisé en ce que** le radiateur est disposé en avant du filtre à particules pour diesel (21) et du réducteur catalytique sélectif (22).

2. Véhicule de travail (1) selon la revendication 1, où le filtre à particules pour diesel (21) et le réducteur catalytique sélectif (22) sont disposés côte à côte dans le sens de la largeur du véhicule de travail.

3. Véhicule de travail (1) selon la revendication 1 ou la revendication 2, où
le filtre à particules pour diesel (21) et/ou le réducteur catalytique sélectif (22) ont une forme allongée dans une dimension ; et
le filtre à particules pour diesel et/ou le réducteur catalytique sélectif sont disposés de manière à orienter le sens de la longueur du filtre à particules pour diesel et/ou du réducteur catalytique sélectif dans le sens de la hauteur du véhicule de travail.

4. Véhicule de travail (1) selon les revendications 1 à 3, où le radiateur (33) est incliné de l'avant vers l'arrière du véhicule de travail.

5. Véhicule de travail (1) selon la revendication 4, où le radiateur (33) est incliné de l'avant vers l'arrière, de manière à positionner l'extrémité supérieure du radiateur (33) à l'arrière de l'extrémité inférieure du radiateur (33) en vue en plan.

6. Véhicule de travail (1) selon l'une des revendications 1 à 5, comprenant en outre un purificateur d'air (34) prévu pour purifier l'air ambiant à refouler vers le moteur (5), ledit purificateur d'air étant disposé en dessous du capot (6) de telle manière qu'au moins une partie de celui-ci chevauche le radiateur en vue en plan et en vue de devant.

7. Véhicule de travail (1) selon l'une des revendications 1 à 6, comprenant en outre : un ventilateur de radiateur (31) prévu pour être entraîné par le moteur (5) et pour refroidir le radiateur (33), ledit ventilateur de radiateur étant disposé entre le radiateur et le filtre à particules pour diesel (21) ainsi que le réducteur catalytique sélectif (22).

8. Véhicule de travail (1) selon la revendication 7, comprenant en outre :
un arbre (32) reliant le moteur (5) et le ventilateur de radiateur (31) et s'étendant linéairement entre le filtre à particules pour diesel (21) et le réducteur catalytique sélectif (22), et prévu pour transmettre une force d'entraînement du moteur au ventilateur de radiateur.

9. Véhicule de travail (1) selon l'une des revendications 1 à 7, comprenant en outre : un moyen de protection (35, 36) disposé en dessous du capot (6) et prévu pour protéger au moins partiellement de l'air le filtre à particules pour diesel (21) et/ou le réducteur catalytique sélectif (22).

10. Véhicule de travail (1) selon la revendication 9, où le moyen de protection (35, 36) est prévu pour entourer au moins le côté avant du filtre à particules pour diesel (21) et/ou du réducteur catalytique sélectif (22).

11. Véhicule de travail (1) selon l'une des revendications 1 à 10, où
le filtre à particules pour diesel (21) et le réducteur catalytique sélectif (22) sont disposés pour former un passage d'air, de telle manière que ledit passage s'étend linéairement vers le moteur (5).

12. Véhicule de travail (1) selon la revendication 11,
où le filtre à particules pour diesel (21) et le réducteur catalytique sélectif (22) sont disposés soit sur le côté gauche, soit sur le côté droit par rapport à une ligne virtuelle s'étendant de l'avant vers l'arrière du véhicule de travail, ladite ligne virtuelle s'étendant en outre par le centre du moteur (5) dans le sens de la largeur du véhicule de travail.

13. Véhicule de travail (1) selon la revendication 11 ou la revendication 12, comprenant en outre :
un premier et un deuxième éléments de protection (35, 36) disposés en dessous du capot (6) ;
le premier élément de protection (35) entourant au moins le côté avant du filtre à particules pour diesel (21), et
le deuxième élément de protection (36) entourant au moins le côté avant du réducteur catalytique sélectif (22).

14. Véhicule de travail (1) selon la revendication 11, la revendication 12 ou la revendication 13, où le premier élément de protection (35) et le deuxième élément de protection (36) forment un passage d'air, de telle manière que ledit passage s'étend linéairement vers le moteur (5) et entre le premier et le deuxième éléments de protection.
